# EUROPEAN PATENT APPLICATION

(11) **EP 2 399 662 A1**
(43) Date of publication of application: **28.12.2011**
(21) Application number: 11171383.0
(22) Date of filing: 24.06.2011
(51) Int. Cl.: B01D 53/86, B01J 21/06

(54) **Pyrolysis methods, catalysts, and apparatuses for treating and/or detecting contaminated gases**

(30) Priority: 28.06.2010 US 824873
(71) Applicant: Honeywell International, Inc., Morristown, New Jersey 07962-2245 (US)
(72) Inventor: Monson, Lyle E., Des Plaines, IL Illinois 60017-5017 (US); Rende, Dean E., Des Plaines, IL Illinois 60017-5017 (US)
(74) Representative: Buckley, Guy Julian

(57) **Abstract**

Processes for treating gas streams contaminated with fluorine-containing compounds, in addition to apparatuses for such treatment processes that may also be used to monitor the emission of these compounds, are disclosed. In the processes and apparatuses, catalytic conversion (pyrolysis) one or more fluorine-containing contaminants (*e.g*., perfluorocarbons) in the gas stream is carried out using a catalyst comprising tungstated zirconia or sulfated zirconia. The catalysts exhibit exceptional responsiveness, recovery, and/or activity, compared to conventional catalysts used for this purpose.

## Description

### FIELD OF THE INVENTION

The present invention relates to methods, catalysts, and apparatuses for treating gas streams contaminated with one or more fluorine-containing compounds, including perfluorocarbons and/or hydrofluorocarbons. Representative processes comprise contacting the gas stream with a catalyst comprising tungstated zirconia or sulfated zirconia to convert at least a portion of the fluorine-containing compounds by pyrolysis.

### DESCRIPTION OF RELATED ART

Fluorine-containing compounds including perfluorinated hydrocarbons (*i.e*., perfluorocarbon compounds) are used extensively in the manufacture of semiconductor materials, and particularly for dry chemical etching and chamber cleaning processes. Perfluorinated compounds in general refer to compounds composed of nitrogen, carbon, and/or sulfur atoms, or mixtures of these atoms, and fluorine atoms but not hydrogen atoms. Other fluorine-containing compounds that may be utilized and/or emitted in semiconductor production have both hydrogen and fluorine atoms. Hydrofluorocarbons, for example, refer to hydrocarbons having one or more carbon atoms substituted with fluorine, and these are often generated as semiconductor manufacturing byproducts. Other uses for perfluorinated compounds and hydrofluorocarbons include polymer blowing agents and refrigerants.

Since the global warming potential of these compounds is thought to be many times greater than that of CO₂, the desire for economical technologies to control emissions of fluorine-containing (or fluorinated) compounds is significant. Catalytic technologies are conventionally used as a final control of such industrial emissions. Catalytic conversion of fluorine-containing compounds generally involves passing a gas stream (*e.g*., an effluent gas stream generated from semiconductor manufacturing) contaminated with these compounds over the active pyrolysis catalyst in order to convert (*i.e*., pyrolyze) the fluorine-containing pollutant compounds to carbon dioxide, water, and hydrogen fluoride (HF) in the treated product gas. Pyrolysis is generally carried out in the presence of oxygen and/or water at an elevated temperature. Catalytic conversion offers substantial advantages over thermal incineration for control of fluorine-containing compound emissions. Primarily, the incorporation of a catalyst to accelerate the reaction rate allows the decomposition or pyrolysis reaction temperature to be reduced by several hundred degrees Celsius, relative to non-catalytic (thermal) processes. The temperature reduction results in energy/operating cost savings, in addition to lower capital costs, a small foot print of resulting abatement unit, a more controllable process, and the elimination of thermal nitrogen oxide (NOₓ) emissions.

The performance of any catalytic treatment process is largely a function of the particular catalyst used. An important consideration is the ability of the catalyst to withstand the reaction environment that results from the catalytic decomposition or destruction of perfluorocarbons, hydrofluorocarbons, and/or other fluorine-containing contaminants to highly corrosive products such as HF, F₂, and COF₂. Many catalytic materials fail to maintain their integrity in this reaction environment, due to fluorine attack, for a significant duration. The instability of such catalysts causes a decrease in contaminant conversion after only a few days of operation. Titania (TiO₂) catalyst supports, for example, are known to convert readily to TiF₄, resulting a loss of both surface area and catalytic activity over a relatively short treatment time. A similar phenomenon has been observed with respect to the conversion of alumina supports to AlF₃, despite the fact that alumina is considered very thermally stable and non-reactive (refractory) as a catalyst support in a large number of other catalytic reactions.

There is consequently a need in the art for catalyst compositions that are stable in the presence of corrosive compounds including the catalytic decomposition products of fluorine-containing compounds such as perfluorocarbons. When used in toxic gas monitoring and/or treatment apparatuses, such catalyst compositions ideally exhibit not only a long life but also favorable response and recovery times, in addition to minimal adsorption or deposition of fluorine-containing residues on the catalyst over the course of operation.

### SUMMARY OF THE INVENTION

The present invention relates to processes for treating gas contaminated with fluorine-containing compounds, in addition to apparatuses for such treatment processes that may, according to some embodiments, be used to monitor the emission of these compounds. Monitoring, for example, may be achieved through the detection of hydrogen fluoride generated from the catalytic decomposition or pyrolysis of perfluorinated compounds and/or other fluorine-containing compounds such as those typically used in semiconductor manufacturing, and particularly in dry etching operations. Representative apparatuses have a catalyst-containing quartz tube as a catalytic reactor for pyrolyzing fluorine-containing compounds, in the presence of water, to hydrogen fluoride (HF), carbon monoxide (CO), carbon dioxide (CO₂), and possibly other pyrolysis products.

In particular, aspects of the invention are associated with the discovery of catalysts that are highly stable in the reaction environment described above, containing hydrogen fluoride and optionally other highly corrosive products, such that the catalysts are suitable for commercial use over an extended period (*e.g*., continuously or intermittently in treating an industrial gas effluent over a number of years). Moreover, the catalysts are highly active and thereby demonstrate an effective fluorine-containing compound conversion level (*e.g*., at least about 90%) at relatively low catalyst bed (or reaction) temperatures (*e.g*., in the range from about 200°C (392°C) to about 400°C (752°F)). Representative catalysts for the pyrolysis of fluorine-containing compounds, and particularly perfluorinated compounds, having these advantageous properties comprise a zirconia support having tungsten or sulfate deposited thereon *(i.e.,* the catalysts comprise tungstated zirconia or sulfated zirconia).

When used in apparatuses for the treatment and/or monitoring of fluorine-containing compounds, the catalysts are resistant to particulates and other fouling/poisoning agents such as silica that are often present in gas emissions from semiconductor manufacturing, which generally serve as contaminated gas feeds (*i.e*., which generally provide the gas contaminated with at least one fluorine-containing compound) to the processes and apparatuses described herein. Moreover, in such apparatuses, the catalysts exhibit short response (or line-out) and recovery times relative to conventional catalysts, in addition to high activity and stability as discussed above. These activity, stability, response, and recovery advantages are thought to be a function of the reduced adsorption of foulants (*e.g*., silica), fluorine-containing compounds (*e.g*., perfluorocarbons), and/or pyrolysis products (*e.g*., HF), in addition to the reduced carry over of HF into the gas effluent from the apparatus when fluorine-containing compounds are not present in the gas to the apparatus (*e.g*., during a recovery or flushing/purging phase).

Embodiments of the invention are therefore directed to processes for treating a gas comprising fluorine-containing compounds (*e.g*., perfluorinated compounds including perfluorocarbon compounds). The processes comprise contacting the gas with a catalyst comprising a tungstated zirconia or sulfated zirconia in the presence of water to pyrolyze at least a portion of the fluorine-containing compounds. These treating processes may be part of a monitoring process in which converted pyrolysis products, especially HF, in the treated product gas are detected. Monitoring may be performed in order to qualitatively determine the presence of fluorine-containing compounds in the gas *(i.e.,* the feed gas that is contacted with the catalyst) or quantitatively determine the amount or concentration of these fluorine-containing compounds. Representative monitoring processes therefore further comprise detecting a pyrolysis product of the fluorine-containing compounds in a treated product gas following contacting of the feed gas comprising the fluorine-containing compound with the catalyst.

Further embodiments of the invention are directed to apparatuses for the pyrolysis of fluorine-containing compounds. The apparatuses comprise a reactor (*e.g*., a quartz tube) having an inlet for feeding a gas comprising one or more fluorine-containing compounds to a catalyst contained in the reactor. The apparatuses further comprise an outlet for discharging a treated product gas following contacting of the gas with a tungstated zirconia or sulfated zirconia catalyst in the reactor, and a heater for heating the catalyst.

Still further embodiments of the invention are directed to semiconductor manufacturing processes comprising exposing a semiconductor material to a reactive etching gas to generate a gas comprising one or more fluorine-containing compounds and contacting the gas with a catalyst as described herein in the presence of water to pyrolyze at least a portion of the one or more fluorine-containing compounds. The contacting of the gas with a catalyst as described herein (or treating of the gas), may be carried out using an apparatus as described above to provide a treated product gas. Particular embodiments, in which the gas is monitored, can further comprise detecting a pyrolysis product (*e.g*., HF that is obtained from pyrolysis of one or more fluorine-containing compounds) in a treated product gas following contacting.

These and other embodiments, and their associated advantages, relating to the present invention are apparent from the following Detailed Description.

### BRIEF DESCRIPTION OF THE DRAWINGS

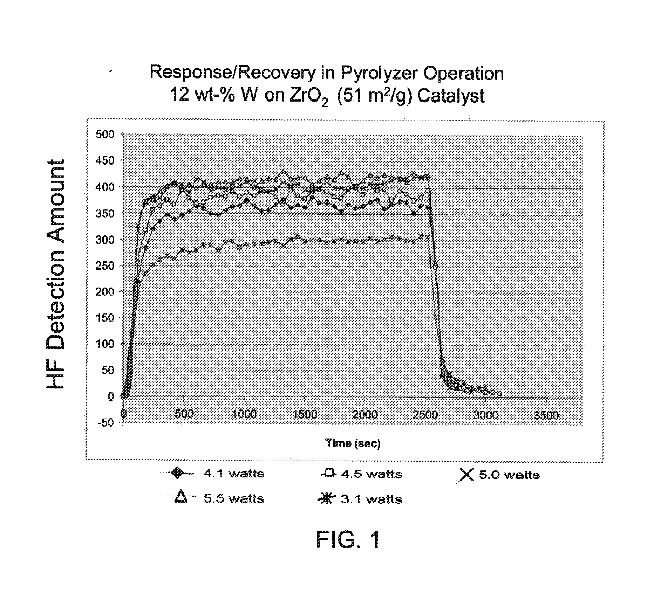

FIG. 1 is a graph showing the amount of the pyrolysis product, hydrogen fluoride (HF), detected over time in the treated product gas of a toxic gas monitor using a Chemcassette™ gas detection system (Honeywell, Inc., Morristown, NJ). Separate curves show results obtained at different heater power levels (and catalyst bed temperatures), using a feed gas containing 9 vol ppm of perfluorocyclopentene (or octafluorocyclopentene, C₅H₈) that was passed through the catalyst bed at time T=0 seconds at a flow rate of about 40 cc/min and then replaced by pure nitrogen at the same flow rate at time T=2500 seconds. The catalyst used was tungstated zirconia having 12 wt-% tungsten and a surface area of the zirconia support of 51 m²/g.

FIG. 2 is a graph showing the amount of the pyrolysis product, HF, detected over time as described with respect to FIG. 1. The catalyst used, however, was tungstated zirconia having 7 wt-% tungsten and a surface area of the zirconia support of 51 m²/g.

FIG. 3 is a graph showing the amount of the pyrolysis product, HF, detected over time as described with respect to FIG. 1. The catalyst used, however, was sulfated zirconia having 1.5 wt-% sulfur and a surface area of the zirconia support of 51 m²/g.

FIG. 4 is a graph showing the amount of the pyrolysis product, HF, detected over time as described with respect to FIG. 1. The catalyst used, however, was tungstated zirconia having 12 wt-% tungsten and a surface area of the zirconia support of 17 m²/g.

FIG. 5 is a graph showing the relationship between perfluorocarbon conversion and heater power, using a toxic gas monitor as described with respect to FIG. 1. The two catalysts tested were both tungstated zirconia having 12 wt-% tungsten. The zirconia supports had surface areas of 51 m²/g and 17 m²/g, according to the catalysts as described with respect to FIGS 2 and 4 above, respectively.

### DETAILED DESCRIPTION

Aspects of the present invention are associated with the discovery of methods, catalysts, and apparatuses used in the treatment of gas comprising contaminants and/or the detection of these gaseous contaminants, particularly fluorine-containing compounds that are often released in semiconductor material production methods. Representative fluorine-containing compounds are perfluorinated compounds composed entirely of fluorine and a second element selected from carbon, nitrogen, sulfur, and combinations thereof. Examples of perfluorinated compounds include nitrogentrifluoride (NF₃) and sulfurhexafluoride (SF₆), as well as the perfluorocarbon compounds composed entirely of carbon and fluorine, including tetrafluoromethane (CF₄), hexafluoroethane (C₂F₆), octafluoropropane (C₃F₈), decafluorobutane (C₄F₁₀), octafluorocyclobutane (cyclo-C₄F₈), octafluorocyclopentene (cyclo-C₅F₈), *etc.* Other fluorine-containing compounds of interest in treatment and detection methods described herein are hydrofluorocarbon compounds containing at least one of each of the elements carbon, hydrogen and fluorine, such as, for example, trifluoromethane (CHF₃) and 1,1,1,2-tetrafluoroethane (C₂H₂F₄). The carbon atom linkages in perfluorcarbon and hydrofluorocarbon compounds may be saturated, unsaturated, straight-chain, branched-chain, and/or cyclic (*e.g*., aromatic or cycloaliphatic). Like perfluorocarbon compounds, hydrofluorcarbon compounds are thought to contribute to global warming. The fluorine-containing compounds, which are capable of being pyrolyzed according to the methods described herein, do not include hydrogen fluoride (HF), which is typically the product of pyrolysis or decomposition.

Fluorine-containing compounds also include chlorofluorocarbons (CFCs) and compounds that contain one or more other halogens, in addition to fluorine. Such compounds are widely used as foaming agents, refrigerants, fire extinguishing agents, fumigants, *etc*. Representative CFCs include CFC-113 (1,1,2-trichloro-1,2,2-trifluoroethane), CFC-11 (trichlorofluoromethane), CFC-12 (dichlorodifluoromethane). Representative contaminated gases (*e.g*., as feed gas streams to processes according to the present invention) therefore include those comprising both perfluorinated compounds, hydrofluorocarbon compounds, CFCs, and any combinations of these compounds. In general, the fluorine-containing compounds may be present in the gas in wide-ranging amounts, but typically the total fluoride content (as atomic F) is from about 10 ppm to about 1% by volume, and often from about 10 ppm to about 5000 ppm by volume. In contrast, the treated product gas after pyrolysis (*e.g*., after exiting a pyrolysis reactor or reaction zone containing the catalyst) generally contains less than about 10 ppm by volume of fluorine-containing compounds other than hydrogen fluoride.

Representative methods include contacting a gas as described above (*e.g*., obtained from a semiconductor manufacturing operation, for example, as an effluent or exhaust gas) with a catalyst comprising tungstated zirconia or sulfated zirconia that catalyzes pyrolysis (catalytic hydrolysis or decomposition) of one or more of the fluorine-containing compounds initially present in the gas, such that at least a portion of the one or more fluorine-containing compounds are pyrolzyed or converted to HF in addition to carbon monoxide (CO) and/or carbon dioxide (CO₂). The source of oxygen, as a reactant with the fluorine-containing compound in the pyrolysis reaction, is normally water vapor that is generally, though not necessarily, present in at least a stoichiometric amount sufficient to convert the carbon content of the fluorine-containing compounds present to CO₂. Typically, water is present in an amount of at least twice the stoichiometric amount and often at least three times the stoichiometric amount. Although usually not necessary, a source of water vapor may be used to maintain a desired level of humidity (*e.g*., at least about 50% relative humidity) in the contaminated feed gas prior to contacting the catalyst.

The pyrolysis methods are carried out under contacting conditions effective for converting generally at least about 80%, typically at least about 90%, and often at least about 95%, of fluoride in the contaminated gas to hydrogen fluoride. The pyrolysis reaction temperature, or temperature of the catalyst during contacting, can be adjusted depending on the desired conversion level and concentration of fluoride in the contaminated gas. Generally, an elevated catalyst bed temperature is used, for example in the range from about 200°C (392°F) to about 700°C (1292°F). Due to the high activity of the catalysts described herein for catalytic pyrolysis, however, lower catalyst bed temperatures, compared to those used with conventional catalysts (*e.g*., silica, alumina, or titania supported catalysts) under otherwise identical conditions, are often advantageously employed to achieve satisfactory conversion with a reduced energy requirement. Catalyst bed temperatures are therefore typically in the range from about 200°C (392°F) to about 500°C (932°F) and often from about 200°C (392°F) to about 350°C (662°F). In continuous processes operating with a flow of contaminated gas, the feed gas flow rate, in terms of micrograms of fluoride (as atomic F) processed per hour per gram of catalyst (µg F/hr·g cat), is generally from about 10 to about 10,000, typically from about 100 to about 5,000, and often from about 200 to about 2,500. A wide range of reaction pressures, for example, from about 0 psig (0 barg) to about 145 psig (10 barg), may be used for the pyrolysis of the fluorine-containing compound(s). Pressures near atmospheric, are commonly chosen for convenience.

Treatment methods, as described herein, therefore effectively pyrolyze fluorine-containing compounds to HF. The HF in the gas effluent exiting the catalytic reactor may then be efficiently removed, for example, by scrubbing using a basic solution such as a hydroxide solution (*e.g*., sodium hydroxide, potassium hydroxide, ammonium hydroxide, *etc*.). The treatment methods may also be part of a monitoring or detection method that further involves detecting HF in the product gas. In a representative embodiment, after the pyrolysis of at least a portion of the fluorine-containing compounds in the feed gas, this treated product gas is analyzed by subjecting it to a chemically impregnated substrate such as paper. HF content may then be determined, for example, by optical scanning to detect a color change. This detection/monitoring step, in which HF is reacted chemically to effect a color change, is exemplified by the Chemcassette™ gas detection system (Honeywell, Inc., Morristown, NJ) for accurate monitoring of gas streams, even at very low contaminant concentrations.

As discussed above, further aspects of the invention relate to the discovery of effective catalysts comprising tungstated or sulfated zirconia for the gas treating methods described herein that have a number of advantages over conventional catalysts, particularly with respect to their use in apparatuses that pyrolyze gas (*e.g*., the contaminated feed gas described above) comprising fluorine-containing compounds. Such apparatuses may be used in the treatment of contaminated gas, for example emissions from semiconductor manufacturing facilities. In a preferred embodiment, apparatuses utilizing the tungstated or sulfated zirconia catalysts are used in the detection and/or monitoring of feed gases contaminated with fluorine-containing compounds. A representative apparatus is the MDA SPM™ Toxic Gas Monitor from Honeywell Analytics (Honeywell, Inc., Morristown, NJ) that utilizes the Chemcassette™ gas detection system as described above. The catalysts described herein have been found to exhibit a combination of important benefits in such apparatuses, including an improved response in the detection of the fluorine-containing compounds, high pyrolysis activity that results in reduced utility or heater power requirements, and low carryover of the fluorine-containing compounds and pyrolysis reaction products after removal of fluorine-containing contaminants from the feed gas. Without being bound by theory, the responsiveness of the catalysts is thought to result from a shortened activation or equilibration period, upon being first contacted with contaminated gas stream. The low carryover is believed to result from reduced adsorption or affinity of feed gas contaminants and pyrolysis products that remain to some extent in the catalyst bed, but may be removed or desorbed by purging with uncontaminated gas (*e.g*., pure nitrogen or air containing no fluoride).

Supports for the tungstated or sulfated zirconia catalysts may utilize a zirconium hydroxide precursor that is available, for example, from MEI of Flemington, N.J. Alternatively, the hydroxide may be prepared by hydrolyzing metal oxy-anion compounds, for example ZrOCl₂, ZrO(NO₃)₂, ZrO(OH)NO₃, ZrOSO₄, TiOCl₂ and the like. Zirconium alkoxides such as zirconyl acetate and zirconium propoxide may be used as well. Hydrolysis can be effected using a hydrolyzing agent such as ammonium hydroxide, sodium hydroxide, potassium hydroxide, sodium sulfate, (NH₄)₂HPO₄, and others. The metal oxy-anion component may in turn be prepared from available materials, for example, by treating ZrOCO₃ with nitric acid. The hydroxide as purchased or generated by hydrolysis is preferably dried at a temperature from about 100°C (212°F) to about 300°C (572°F) to vaporize volatile compounds.

The support comprising zirconia or a precursor such as zirconium hydroxide can be used in powder form or in any desired shape such as a pill, cake, extrudate, granule, sphere, *etc*., in varying sizes. A representative zirconia powder has an average particle size from about 0.30 mm (50 mesh) to about 2.0 mm (10 mesh), and often from about 0.60 mm (30 mesh) to about 0.84 mm (20 mesh). Larger shapes, for example cylindrical extrudates having a diameter of about 3.2 mm (0.125 inches), may be formed by mixing the zirconia or precursor with a binder, although the catalyst may be made and successfully used without a binder, such that the support comprises substantially all (*e.g*., at least about 90%, typically at least about 95%, and often at least about 99%, by weight zirconia). The binder, when used, generally comprises from about 0.1% to about 50%, and typically from about 5% to about 20%, by weight of the finished catalyst. According to other embodiments, however, the support may comprise predominantly binder, for example in the range from 50% to about 99% binder, and often from about 75% to about 98% binder. Suitable binders include refractory inorganic oxides other than zirconia, with silica, alumina, silica-alumina, magnesia, zirconia, and mixtures thereof being representative. A preferred binder is alumina, with eta- and/or gamma-alumina being preferred. The zirconia or precursor and optional binder may be mixed along with a peptizing agent such as HCl, HNO₃, KOH, *etc.* to provide a homogeneous mixture that is formed into a desired shape according to known procedures. These include extrusion (*e.g*., using a screw extruder or extrusion press), spray drying, oil dropping, marumarizing, conical screw mixing, *etc.* The forming method determines how much water, if any, is added to the mixture. Thus, if extrusion is used, then the mixture should be in the form of a dough, whereas if spray drying or oil dropping is used, then sufficient water is required for slurry formation.

In the case of preparing tungstated zirconia catalysts, the support (which may be bound and/or formed as described above) is impregnated with a tungsten compound, generally by contacting the support, comprising zirconia or a zirconia precursor, with an impregnation solution of the compound. Suitable compounds include ammonium tungstate compounds such as ammonium metatungstate (AMT) and ammonium paratungstate (APT). Other compounds such as metatungstic acid, sodium tungstate, and others capable of forming tungsten oxide or tungstate ion upon calcining may be used. The concentration of the tungsten compound in such impregnation solutions generally ranges from about 0.1 M to about 5 M.

Methods for preparing sulfated zirconia include those described in "Catalysis Review," SCI. ENG. 38 (3), 329-412 (1996). As discussed above, the methods can involve hydrolyzing a zirconium salt, such as ZrOCl₂ or ZrO(NO₃)₂ with aqueous ammonia to produce zirconium hydroxide as a precursor of the zirconia support. The zirconium hydroxide may then be treated with dilute sulfuric acid or (NH₄)₂SO₄ solution as an impregnation solution. Concentrations of sulfuric acid and ammonium sulfate impregnation solutions are generally in the range from about 0.01M to 10M, preferably from about 0.1M to about 5M. Sulfate precursors, or compounds capable of forming sulfate (*e.g*., after calcining) may also be used. Suitable precursors include hydrogen sulfide, sulfur dioxide and sulfur- and halogen-containing compounds such as fluorosulfonic acid, sulfuryl chloride, thionyl chloride and others.

Additional catalytic components, such as vanadium (*e.g*., as vanadate) may be dispersed on the support using the same impregnation solution containing sulfate and/or tungstate ions or using a different impregnation solution that is contacted with the support in a separate impregnation step.

Static or flowing conditions may be used for contacting between the impregnation solution and the support comprising zirconia or a zirconia precursor (*e.g*., zirconium hydroxide) to provide the desired degree of tungsten and/or sulfur impregnation. The impregnation solution contacting temperature is generally in the range from about 20°C (68°F) to about 200°C (392°F), and often from about 25°C (77°F) to about 150°C (302°F). The duration of contacting at this temperature (contacting time) is generally from about 1 minute to about 5 hours, and often from about 5 minutes to about 3 hours. The contacting time is inclusive of any subsequent drying step, in which the support and impregnation solution remain in contact at a temperature within these ranges. The impregnation conditions are selected to achieve a desired level of tungsten (as tungsten metal) or sulfur (as elemental sulfur), for example from about 5% to about 20% by weight in the case of tungsten and from about 1% to about 15% by weigh in the case of sulfur, in the resulting catalyst.

Specific impregnation methods include evaporative impregnation, in which the support is normally placed into a rotary evaporator which is equipped with a steam jacket. The impregnation solution with desired concentration(s) of tungstate and/or sulfate ions (and/or ions of additional catalytic components) is added and the mixture cold rolled in the absence of steam for a time from about 10 to 60 minutes. Steam is then introduced to heat the mixture and evaporate the solvent over a period generally ranging from about 1 to about 4 hours to provide the tungstate- and/or sulfate-impregnated support. As an alternative to evaporative impregnation, which uses an excess of impregnation solution and evaporation of the solvent, a pore filling method may be used. In pore filling, the impregnation solution is used in an amount at least sufficient to occupy the pore volume of the support. Other methods of dispersing catalyticially active components onto the support comprising zirconia or a zirconia precursor include coprecipitation of the components or cogellation.

Following impregnation, the tungstate- and/or sulfate-impregnated support is then calcined, such that zirconium hydroxide in the support is converted substantially or completely to zirconia. Effective calcining procedures generally involve heating the support after impregnation to a temperature from about 300°C (572°F) to about 750°C (1382°F), and often from about 400°C (752°F) to about 650°C (1202°F), for a time (or duration of heating of the support to this temperature) generally from about 1 hour to about 10 hours, and often from about 3 hours to about 9 hours. The heating is normally performed with a flow of oxygen-containing gas (*e.g*., air, oxygen, or oxygen-enriched air). Usually during the catalyst preparation procedure, (i) drying of zirconia support is carried out before the impregnation and/or (ii) drying of the impregnated, zirconia support is performed after the impregnation and before calcining. Typical conditions for either of these drying steps, if used, include a temperature from about 25°C (77°F) to about 250°C (482°F) and a time from about 0.5 hours to about 24 hours. Any or all of the drying and calcining steps may be performed under purge with a gas (*e.g.,* air, oxygen, nitrogen, argon, *etc.* or mixture of gases), preferably at ambient or slightly elevated pressure.

In the resulting catalysts comprising tungstated or sulfated zirconia, the zirconia support generally has a surface area from about 1 m²/g to about 150 m²/g, and often from about 5 m²/g to about 100 m²/g. Also, the average pore diameter (or pore size) of the zirconia support is generally in the range from about 100 Å to about 500 Å, and often from about 150 Å to about 300 Å. Surface area and average pore diameter are measured according to the Brunauer, Emmett and Teller (BET) method based on nitrogen adsorption (ASTM D1993-03(2008)). The total pore volume of the support is generally from about 0.01 cc/g to about 0.5 cc/g, and often from about 0.05 cc/g to about 0.30 cc/g. Especially good performance is obtained when the zirconia support is in the tetragonal phase, the monoclinic phase, or a combination of both of these phases.

Overall, aspects of the invention are directed to processes for pyrolyzing one or more fluorine-containing compounds in contaminated gas by contact of the gas with a catalyst comprising tungstated zirconia or sulfated zirconia. Other aspects are directed to methods for detecting and/or monitoring fluorine-containing compounds by analyzing, either qualitatively or quantitatively, the pyrolysis reaction product, HF, in the treated product gas after pyrolysis (e.g., after exiting a pyrolysis reactor or reaction zone containing the catalyst). Further aspects are directed to apparatuses, including fluorine-containing compound monitoring and/or detecting apparatuses, that utilize the pyrolysis of fluorine-containing compounds, including perfluorinated compounds, according to methods described herein. In this regard, the catalysts described herein provide exceptional performance characteristics, as discussed above, when used in such detection and/or monitoring methods and apparatuses. In particular, important benefits are realized in terms of detection responsiveness, reduced HF carryover/desorption in the subsequent absence or reduction of fluorine-containing compounds (*i.e*., improved accuracy), and lower catalyst bed operating temperature requirements (*i.e*., reduced energy consumption).

Yet further aspects of the invention are directed to the use of the pyrolysis methods in semiconductor manufacturing processes. In view of the present disclosure, it will be seen that several advantages may be achieved and other advantageous results may be obtained. Those having skill in the art will recognize the applicability of the methods disclosed herein to any of a number of pyrolysis methods, monitoring and detection processes, and apparatuses for carrying out these methods and processes. Those having skill in the art, with the knowledge gained from the present disclosure, will recognize that various changes could be made in the above processes without departing from the scope of the present disclosure.

The following examples are set forth as representative of the present invention. These examples are not to be construed as limiting the scope of the invention as other equivalent embodiments will be apparent in view of the present disclosure and appended claims.

### EXAMPLE 1

Tungstated and sulfated zirconia catalyst samples were prepared using ammonium metatungstate and sulfuric acid impregnation solutions, respectively, as described above. After contacting the support and solution using a pore filling method, the impregnated supports were calcined in air for about 4 hours at about 625°C (1157°F) to provide catalysts having tungsten and sulfur contents, support surface areas, and other properties as described previously. A summary of pertinent information regarding these catalyst preparations is provided in the Table 1 below:

**Table 1. Tungstated and Sulfated Zirconia Catalyst Preparations**

| **Catalyst** | **Tungsten or Sulfur Loading** | **Support/Surface Area** | **Particle Size** |
|---|---|---|---|
| A | 12 wt-% W | 51 m²/g | 20-30 mesh |
| B | 7 wt-% W | 51 m²/g | 20-30 mesh |
| C | 1.5 wt-% S | 51 m²/g | 20-30 mesh |
| D | 12 wt-% W | 17 m²/g | 20-30 mesh |

The catalysts were tested for their performance in an MDA SPM™ Toxic Gas Monitor from Honeywell Analytics (Honeywell, Inc., Morristown, NJ) utilizing a Chemcassette™ gas detection system for detecting the pyrolysis product hydrogen fluoride. The catalysts were loaded into the quartz tube reactor of the apparatus, which was equipped with a heater having variable power to attain a desired reactor/catalyst bed temperature for carrying out pyrolysis. A model feed gas containing 9 vol ppm of perfluorocyclopentene (or octafluorocyclopentene, C₅H₈) was passed through the catalyst bed at time T=0 seconds at a flow rate of about 40 cc/min. At time T=2500 seconds, the flow of gas containing the fluorine-containing compound was replaced with a flow of nitrogen at the same flow rate.

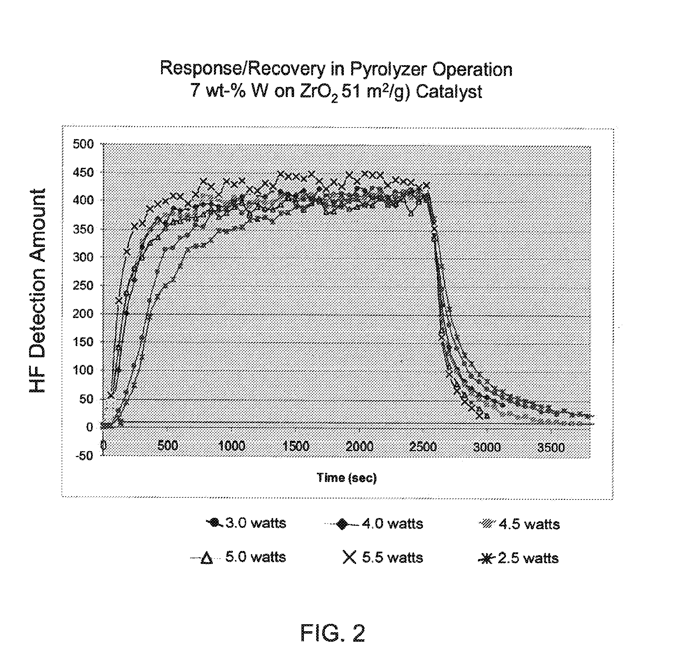

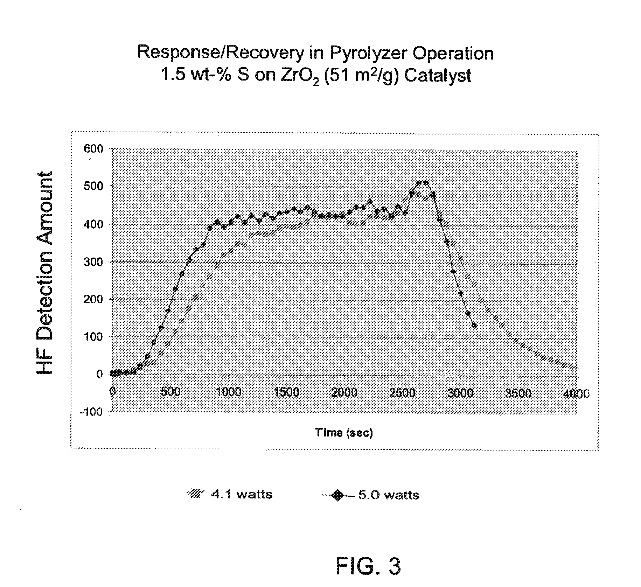

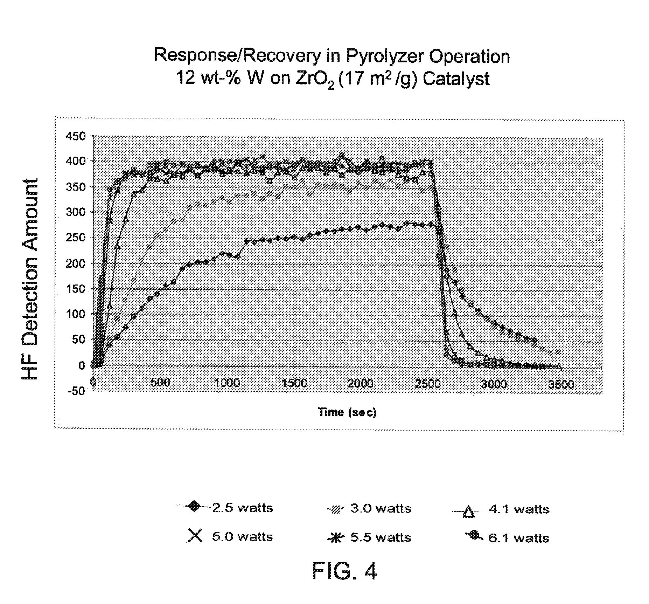

The graphs in FIGS. 1-4 show the relationships, for catalysts A-D, respectively, between the amount of the pyrolysis product, hydrogen fluoride (HF), detected over time in the treated product gas, at various heater power levels (and catalyst bed temperatures). The tests demonstrated both the responsiveness and recovery exhibited by catalysts A, B, C, and D above, in addition to their activity. In particular, the results in FIGS. 1-4 show that these catalysts converted the fluorine-containing compound, very soon after its introduction, to HF (*i.e.,* the catalysts all exhibited good responsiveness with little lag time between introduction of the contaminant and its detection in the gas effluent). Following removal of the contaminant, the detected amount of HF quickly decreased, due to a favorably small absorption of the fluorine-containing compound and/or latent desorption of its conversion product, HF (*i.e.,* the catalysts all exhibited a short recovery time with little lag time between stopping flow of the contaminant and the accompanying, sharp decline in the amount of HF detected). Moreover, complete conversion (pyrolysis) of the perfluorocarbon was achieved at a relatively low heater power setting. The responsiveness, recovery, and activity of the tungstated and sulfated zirconia catalysts described herein were superior to the corresponding properties of conventional pyrolysis catalysts used in detection/monitoring apparatuses, including alumina, silica, and titania supported catalysts.

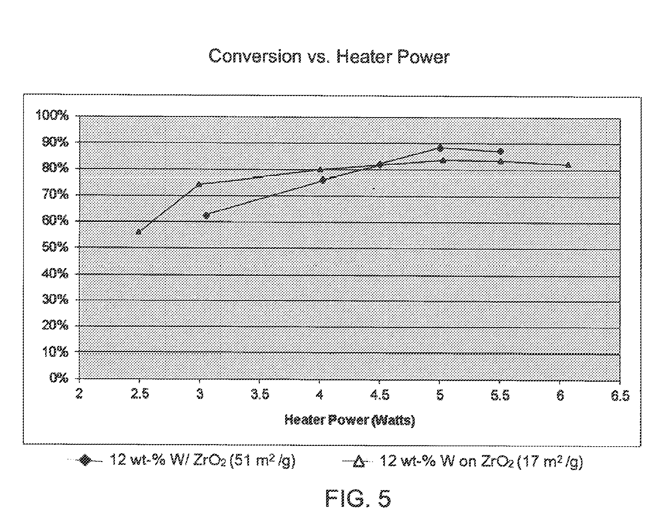

FIG. 5, generated from the data obtained from these experiments, further illustrate the high activity of catalysts described herein, as evidenced by the nearly complete conversion of the perfluorcarbon C₅H₈ at only moderate heater power settings. The two curves show the performance of catalysts A and D above, having 12 wt-% tungsten on zirconia supports with surface areas of 17 m²/g and 51 m²/g, respectively.

## Claims

1. A method for treating a gas stream comprising fluorine-containing compounds, the process comprising contacting the gas stream with a catalyst comprising tungstated zirconia or sulfated zirconia in the presence of water to pyrolyze at least a portion of the fluorine-containing compounds.

2. The method of claim 1, wherein the fluorine-containing compounds comprise perfluorinated compounds.

3. The method of claim 2, wherein the perfluorinated compounds include perfluorocarbon compounds.

4. The method of claim 3, wherein the perfluorinated compounds include a compound selected from the group consisting of nitrogen trifluoride, sulfur hexafluoride, tetrafluoromethane, hexafluoroethane, octafluoropropane, octafluorocyclopentene, decafluorobutane, and mixtures thereof.

5. The method of any of claims 1 to 4, wherein the catalyst comprises a zirconia support having a BET surface area from about 1 m²/g to about 150 m²/g.

6. The method of any of claims 1 to 5, wherein the catalyst comprises a zirconia support having zirconia in a tetragonal phase, a monoclinic phase, or a combination of both phases.

7. The method of any of claims 1 to 6, wherein the catalyst comprises tungstated zirconia.

8. The method of claim 7, wherein the tungstated zirconia comprises tungsten in an amount from about 5% to about 20% by weight.

9. An apparatus for the pyrolysis of fluorine-containing compounds, the apparatus comprising:
(a) a reactor having (i) an inlet for feeding a gas stream comprising fluorine-containing compounds to a catalyst contained in the reactor and (ii) an outlet for discharging a treated effluent stream following contacting of the gas effluent with the catalyst in the reactor, and
(b) a heater for heating the catalyst,
wherein the catalyst comprises tungstated zirconia or sulfated zirconia.

10. A semiconductor manufacturing process comprising:
(a) exposing a semiconductor material to a reactive etching gas to generate a gas stream comprising fluorine-containing compounds, and
(b) contacting the gas stream with a catalyst comprising tungstated zirconia or sulfated zirconia in the presence of water to pyrolyze at least a portion of the fluorine-containing compounds.
